Europäisches Patentamt

European Patent Office

Office européen des brevets

(11) Veröffentlichungsnummer: **0 096 380**
A2

(12) **EUROPÄISCHE PATENTANMELDUNG**

(21) Anmeldenummer: 83105485.3

(22) Anmeldetag: 03.06.83

(51) Int. Cl.³: **G 01 V 3/08**

(30) Priorität: 05.06.82 DE 3221301

(43) Veröffentlichungstag der Anmeldung:
21.12.83 Patentblatt 83/51

(84) Benannte Vertragsstaaten:
AT BE CH DE FR GB LI SE

(71) Anmelder: Seba-Dynatronic Mess- und Ortungstechnik GmbH
Industriestrasse 6
D-8601 Baunach(DE)

(72) Erfinder: Jäckle, Eugen, Ing. grad.
Galgenweg 18
D-8601 Baunach(DE)

(72) Erfinder: Pfaff, Helmut
Am Stockwald 53 a
D-7742 St. Georgen(DE)

(74) Vertreter: Riebling, Günter, Dr. Ing. et al,
Rennerle 10 Postfach 3160
D-8990 Lindau(DE)

(54) Verfahren zum Orten unterirdisch, ferromagnetischer Körper.

(57) Bei dem Verfahren zum Orten interirdischer, ferromagnetischer Körper wird mittels eines Magnetometers die Inhomogenität des natürlichen Erdmagnetfeldes in der nähe des unterirdischen ferromagnetischen Körpers an der Erdoberfläche erfaßt. Das Verfahren dient vorallem zur Ortung interirdischer Schieberkappen, Schieberstangen oder unterirdisch eingegrabener Markierungsstäbe.

FIG 3

EP 0 096 380 A2

Verfahren zum Orten unterirdisch, ferromagnetischer Körper

Gegenstand der Erfindung ist ein Verfahren zum Orten unterirdischer, ferromagnetischer Körper, wie z.B. Schieberkappen, Schieberstangen oder Markierungsstäbe.

Die Ortung von Schieberkappen , oder genauer betrachtet, der darunter befindlichen Schieberstange, wurde bisher mit Metallsuchgeräten gelöst, die für diesen speziellen Anwendungsbereich besonders modifiziert wurden.

Folgende Meßverfahren wurden dazu angewandt:

a) Magnet-Kompaß-Verfahren

b) Wirbelstrom-Verfahren

c) Induktivitätsverstimmungs-Verfahren

**Wirkungsweise der bisher üblichen Meßverfahren:**

Beim Magnet-Kompaß-Verfahren wird der Rest- oder Eigen-Magnetismus der Schieberkappe und des darunter befindlichen Hüllrohres durch einen Magnet-Kompaß angezeigt. Dieser besteht aus einer in der vertikalen Ebene frei aufgehängten Magnetnadel. Die Nachteile dieses Verfahrens liegen in der etwas umständlichen Handhabung, da das Gerät stets in definierter Lage zum magnetischen Nordpol geführt werden muß. Zudem kann eine nur kleine Suchfläche bestrichen werden, so daß der Zeitaufwand zur Absuchung einer großen Fläche erheblich ist. Ein weiterer Nachteil ist das Nachlassen der Empfindlichkeit, da die Kompaßnadel sich im Laufe der Zeit entmagnetisiert. Der Vorteil dieses Verfahrens liegt jedoch darin, daß nur Eisenmetalle angezeigt werden.

Beim Wirbelstrom- und Induktivitätsverstimmungs-Verfahren hingegen werden alle Metalle angezeigt. Durch den besonderen Aufbau der dazu benützten Suchspulen sprechen diese Geräte vorzugsweise auf Metallflächen, z.B. die Schieberkappe an. Fehlmessungen sind dabei allerdings nicht zu vermeiden, da das Erdreich immer wieder mit metallischem Unrat wie Dosen, Zigarettenpackungen, Kronenkorken usw. "angereichert" ist.

Wenn die Schieberkappe und die darunter befindliche Schieberstange tiefer liegen als 50 cm, sind für diese Geräte ebenfalls Grenzen gesetzt. Tiefer arbeitende Geräte sind technisch zwar möglich, doch von der Bedienung her sehr kompliziert und verhältnismäßig teuer.

Die bisher für diese Messungen eingesetzten Metallsuchgeräte brachten also nicht immer die gewünschten Resultate. Zum einen konnten aufgrund der kleinen Oberfläche der Suchobjekte nur eine geringe Suchtiefe erreicht werden. Zum anderen wurden

alle metallischen Gegenstände angezeigt, wodurch Fehlaufgrabungen unvermeidbar waren.

Hier bringt ein neues Ortungsverfahren die längst gesuchte Problemlösung. Basis des neuen Verfahrens ist eine hochempfindliche Magnetfeldsonde. Sie ist in der Lage, geringste Abweichungen des homogenen und an jdem Ort vorhandenen Erdmagnetfeldes zu regestrieren. Bekanntermaßen ist der magnetische Leitwert von ferromagnetischen Metallen wesentlich besser als der anderer Stoffe oder Medien. Aus diesem Grund wird ein gleichmäßiges, breit gefächertes Erdmagnetfeld durch einen in diesem Feld befindlichen ferromagnetischen Körper so verformt, daß es nicht mehr gleichmäßig verläuft und damit gestört ist. Ein bestimmter Anteil der Feldlinien fließt durch den ferromagnetischen Körper und verursacht damit die Abweichung des sonst gleichmäßigen Magnetfeldes.

Bekanntlich besitzt die Erde ein Magnetfeld, welches gekennzeichnet ist von magnetischen Feldlinien, die auf einer Polhälfte austreten, um nach Durchflutung des freien Raumes wieder auf der anderen Polhälfte einzutreten. In Bild 2 ist das daraus resultierende Dipolfeld der Erde aufgezeigt. Zur Beschreibung des Magnetfeldes an einem Ort gehören folgende Elemente:

a) Horizontalintensität H
b) Vertikalintensität Z
c) Totalintensität F

In erster Näherung gleicht das erdmagnetische Feld dem Feld eines Dipols im Erdmittelpunkt, dessen Achse so gegen die Rotationsachse geneigt ist, daß sie die Erdoberfläche in den Punkten A und B durchstößt.

Die Einheit der magnetischen Feldstärke ist das Oersted und das Gamma (1 Oersted = $10^5$ Gamma). Am geomagnetischen Äquator beträgt die Horizontalintensität H = 31.300 Gamma und die Vertikalintensität Z = 0. Für jeden Punkt der Erdoberfläche ergibt sich in Abhängigkeit der Koordinanten des geomagnetischen Längen- und Breitengrades sowie der Inklination un der Deklination eine bestimmte Totalintensität F, deren Größe im Rahmen einer lokalen Messung als Konstante betrachtet werden kann. Die magnetischen Feldlinien treten dabei kohärent, d.h. sehr gleichmäßig und in einem bestimmten Winkel aus. Dieser Austrittswinkel liegt im Norden Deutschlands bei ca. 44 Grad und im Süden bei ca. 37 Grad gegen den magnetischen Nordpol ausgerichtet. Richtung, Dichte bzw. Feldstärke und Polarität dieser Feldlinien konnten bisher mir wissenschaftlichen Magnetometern gemessen werden.

Treffen die erdmagnetischen Feldlinien auf ferromagnetische Stoffe, so findet in diesen eine Feldverdichtung statt, die auf den besseren magnetischen Leitwert des ferromagnetischen Materials zurückzuführen ist. Damit wird das an dieser Stelle sonst gleichmäßig verteilte Erdmagnetfeld unregelmäßig. Diese Unregelmäßigkeit oder Störung des kohärenten Feldes zu orten, ist Aufgabe des neuartigen Meßgerätes.

Die neuartige Sonde ist nun so konstruiert, daß sogenannte nichtkohärente und damit verzerrte Erdmagnetfelder festgestellt werden. Im Prinzip werden zwei hochempfindliche Magnetfeldsonden in zwei ineinander verschiebbaren Rohren untergebracht.

Durch die Möglichkeit der Entfernungsänderung der beiden Sonden kann die Empfindlichkeit des Gerätes verändert werden. Die beiden Magnetfeld-Sonden sind so gegeneinander kompensiert, daß das normale Erdmagnetfeld nicht angezeigt wird, hingegen jede Störung dieses Feldes oder auch das Vorhandensein anderer magnetischer, sogenannter Sekundärfelder. Das bedeutet, daß andere Metalle von diesem Gerät nicht registriert werden.

Vorzugsweise werden lange, senkrecht im Erdreich befindliche ferromagnetische Gegenstände signalisiert. Kurze, jedoch flächenmäßig ausgedehnte Suchobjekte wie Schieberkappen, Deckel usw. treten dabei weniger in Erscheinung.

Das bedeutet, daß mit diesem Verfahren eigentlich immer das Schiebergestänge und weniger die Schieberkappe geortet wird. Auch dann, wenn die Schieberkappe über der Schieberstange liegt, wird in erster Linie nur das Schiebergestänge angezeigt. Dies ist darauf zurückzuführen, daß die Ablenkung des Erdmagnetfeldes durch die geringe Höhe der Schieberkappe nur in direkter Nähe derselben feststellbar ist.

Mit diesem Verfahren sind naturgemäß auch andere ferromagnetische Ortungsobjekte im Erdreich aufzuspüren, vorausgesetzt, es findet in diesen eine Ablenkung des Erdmagnetfeldes statt oder aber, das Suchobjekt besitzt einen Eigenmagnetismus, der stärker ist als das umgebende Erdmagnetfeld. So besteht die Möglichkeit, Stahl- und Gußrohre, Wassertöpfe, aber auch Kabelmuffen und Spulenkästen über die Verzerrung des Erdmagnetfeldes an dieser Stelle punktgenau zu orten.

Das hier beschriebene, neue Verfahren ist eine passive Methode, bei der keine Frequenzen ausgestrahlt werden und kann damit auch in Gebieten eingesetzt werden, wo Hochfrquenz-Generatoren unerwünscht sind. Eine einfache Einknopf-Bedienung ermöglicht die Handhabung durch ungeschultes Personal.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte räumliche Ausbildung werden als erfindungswesentlich beansprucht, soweit
sie einzeln oder in Kombination gegenüber dem Stand der Technik neu sind.

Im folgenden wird die Erfindung anhand von lediglich einen
Ausführungsweg darstellende Zeichnungen näher erläutert.
Hierbei gehen aus den Zeichnungen und ihrer Beschreibung
weitere erfindungswesentliche Merkmale und Vorteile der
Erfindung hervor.

Es zeigen:

Fig. 1 Reichtiefe der Magnetfeld-Sonde nach der Erfindung
in Abhängigkeit von verschiedenen Stangenlängen einer Schieberstange.

Fig. 2 schematisiert gezeichnetes Erdmagnetfeld mit dem daraus resultierenden Dipolfeld.

Fig. 3 schematisiert gezeichnete Inhomogenität des Erdmagnetfeldes bedingt durch einen unterirdischen ferromagnetischen
Körper.

Fig. 4 Inhomogenität des Magnetfeldes durch ein Schiebergehäuse.

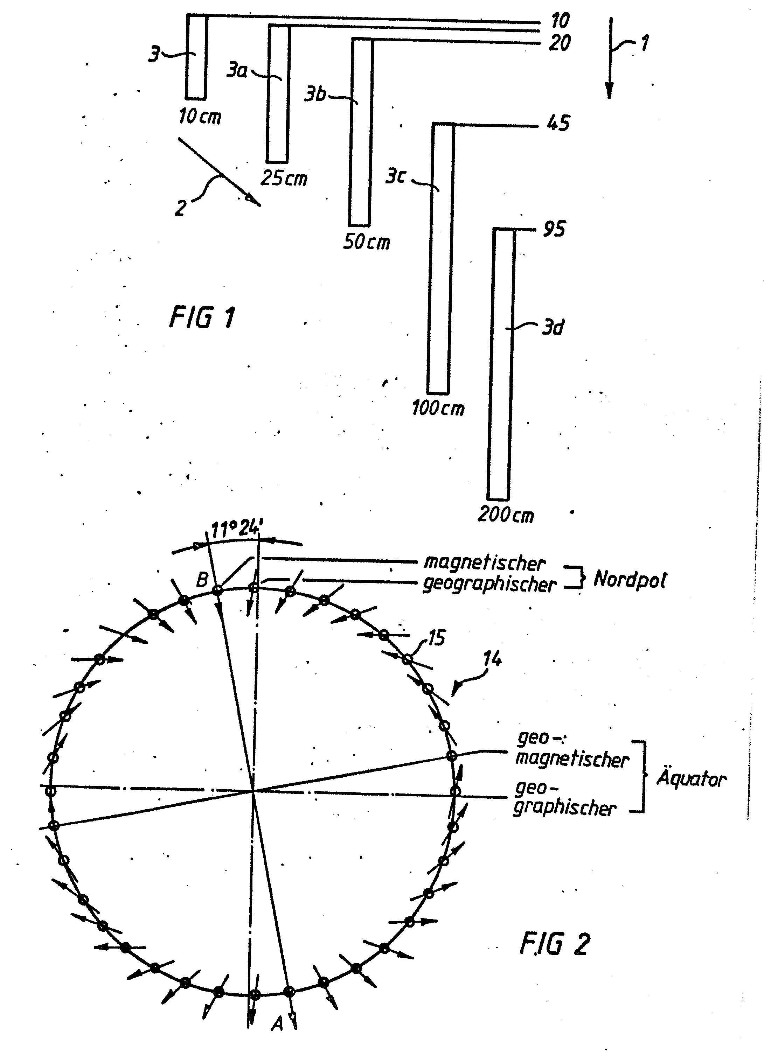

Fig. 1 zeigt, daß die Reichtiefe (1) mit dem vorgeschlagenen
Verfahren bezüglich unterschiedlicher Stangenlängen (2) von
Schieberstangen (3, 3a, 3b, 3c, 3d) sehr groß ist. Hiermit ist es also möglich sehr empfindlich auch tief vergrabene unterirdische ferromagnetische Körper durch das vorgeschlagene Verfahren zu erfassen.

In Fig. 2 ist das vorher erwähnte Erdmagnetfeld (14) aufgelöst in einzelne Dipole (15) dargestellt.

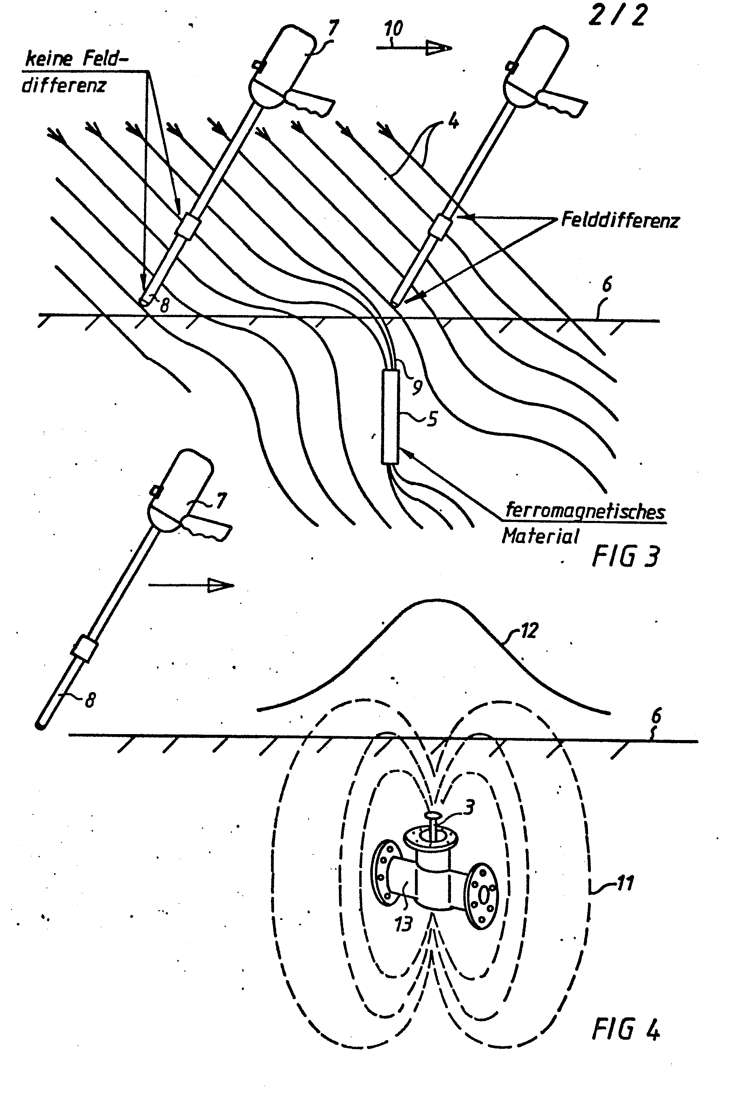

Fig. 3 zeigt die Störung der Magnetfeldlinien (4) unterhalb der Erdoberfläche (6), wenn dort ein Markierungsstab (5) aus einem ferromagnetischen Material eingegraben wird. Im Markierungsstab (5) findet eine Bündelung (9) der Magnetfeldlinien (4) dar, die von dem entlang der Erdoberfläche (6) geführtem Magnetometer (7) erfasst wird. Das Magnetometer (7) besteht aus zwei hochempfindlichen Magnetfeld-Sonden (8,8,) die in zwei ineinander verschiebbaren Rohren untergebracht sind. Bei Erfassung der Inhomogenität (Bündelung 9) der Magnetfeldlinien (4) wird in der einen Magnetfeld-Sonde (8) eine andere Spannung induziert als in der anderen Magnetfeld-Sonde. Hierdurch gerät die elektrische Brückenschaltung aus dem Gleichgewicht, weil die beiden Magnetfeld-Sonden (Hall-Sonden) bezüglich der Brückendiagonalen gegenüberliegend in einer elektrischen Brückenschaltung zusammengeschaltet sind. In der Brückendiagonalen wird daher eine Spannung erscheinen, die über mehrere aufeinanderfolgende Verstärker hochverstärkt und dann schliesslich im Magnetometer(7) optisch oder akustisch angezeigt wird. Das Magnetometer (7) wird hierbei in Pfeilrichtung (10) entlang der Erdoberfläche (6) geführt.

Fig. 4 zeigt das Maximum der Inhomogenität in Form einer Verteilungskurve (12) oberhalb der Erdoberfläche (6). Hier ist als ferromagnetischer Körper ein Schiebergehäuse (13) unterirdisch vergraben, desser Schieberstange (3) vorallem zur Bündelung des Erdmagnetfeldes beiträgt. Die Feldlinien (11) verlaufen dann in der eingezeichneten Richtung und erzeugen die schematisiert darüber dargestellte Verteilungskurve (12) der Inhomogenität. Das über das Schiebergehäuse
(13) geführte Magnetometer (7) wird daher mit seinen Magnetfeld-Sonden (8,8) das Maximum der Inhomogenität erfassen
und damit ist der Ort des Schiebergehäuses (13) gefunden.

Kurze oder flächenmäßig ausgedehnte Suchobjekte wie Schieberkappen, Deckel, Ventile ect. treten im geomagnetischen Feld
kaum als Störkörper in Erscheinung, da der magnetische Leitwert zu kurz ist. Diese Gegenstände sind jedoch häufig mit
einem Restmagnetismus (Remanenz) versehen, der wiederum zur
Ortung des Objektes führen kann (Fig. 4).

Das neue Verfahren kann neben der Ortung unbekannter ferromagnetischer Suchobjekte besonders als Markierungssystem benützt werden. So sind z.B. Markierungssonden mit einer Länge
von 60 cm noch sicher bis in eine Tiefe von 80 cm zu orten.
Damit besteht die Möglichkeit, Lagepositionen mit Markierungsstäben zu kennzeichnen, wobei diese weit unterhalb der Pflugtiefe eingebracht sein können.

Der ins Erdreich eingetriebene Markierungsstab besteht aus
einem oberflächengeschützten Stahl in T-Form. Diese Form ist
weitgehend verwindungsfrei und verhindert durch diese spezielle Formgebung ein Abtriften beim Einschlagen der Sonde.

Dieses Markierungssystem ist wesentlich preiswerter als bisher bekannte Systeme z.B. das Einbringen eines Schwingkreises an der Markierungsstelle, wobei die Ortung dieses
Schwingkreises mit einem Resonanzmeter erfolgt.

0096380

Das neue magnetische Markierungssystem hat den Vorteil, daß man an gewünschten zu markierenden Punkten Magnete entweder als fest- oder pulverförmige Magnete nachträglich anbringen kann und feste Magnete auch noch einstellen kann, so daß ihre optimale Ortung durch ein speziell hierfür besonders geeignetes Gerät, wie im Anspruch 4 beschrieben, möglich ist. Zum Beispiel bei der Verwendung von Kunststoffröhren bei der deren Enden mit Dauermagneten versehen sind kann man die Lage eines einzelnen Rohrendstückes oder eines gesamten Rohrverlaufes nachträglich durch Magnetometer ermitteln.

Werden die Markierungen bei Schiebern und Armaturen für Gas- Wasser und Fernheizleitungssysteme verwand, so ist es wiederum möglich bei Notwendigkeit einer schnellen Ortung z.B. im Katastrophendienst magnetometrisch markierte Stellen sofort zu finden.

Zur Erzielung einer eindeutigen räumlichen Lage des Magnetfeldes ist ein stabförmiger Magnetmarkenträger besonders zweckmäßig.

Wichtig ist es, wenn man derartige Magnetmarken für das Ortungsverfahren für metallfreie Lichtwellenleiter, Kunststoffrohre oder andere metallfreie Versorgungssysteme verwendet, in dem an den Wendepunkten der Leitungsführung Magnetmarkierungen angebracht werden. Dabei besteht die Möglichkeit die Leitungsführung nichtmetallischer Leitungssysteme zu rekonstruieren.

P a t e n t a n s p r ü c h e

1. Verfahren zum Orten unterirdisch, ferromagnetischer Körper, wie z.B. Schieberkappen, Schieberstangen oder Markierungsstäbe, d a d u r c h  g e k e n n - z e i c h n e t , daß mittels eines Magnetometers (7) die Inhomogenität des natürlichen Erdmagnetfeldes (14) in der Nähe des unterirdisch ferromagnetischen Körpers an der Erdoberfläche (6) erfaßt wird.

2. Verfahren nach Anspruch 1, d a d u r c h  g e - k e n n z e i c h n e t , daß unterirdische Körper eine Schieberstange (3, 3a, 3b, 3c, 3d) eines Ventilschiebers ist.

3. Verfahren nach Anspruch 1, d a d u r c h  g e - k e n n z e i c h n e t , daß der unterirdische Körper ein ferromagnetischer Markierungsstab (5) ist, der unterhalb der Pflugtiefe im Erdboden eingegraben ist.

4. Vorrichtung zur Durchführung des Verfahrens nach An- spruch 1, d a d u r c h  g e k e n n z e i c h n e t , daß der Magnetometer (7) zwei hochempfindliche Magnetfeldsonden (8,8) in zwei ineinander verschiebbaren Rohren aufweist, die in einer elektrischen Brückenschaltung so gegeneinander verschaltet sind, daß ein Ungleichgewicht in den von den Magnetfeldsonden induzierten Spannungen zu einer Ausgangsspannung in der Brückendiagonalen führt.

5. Ferromagnetischer Körper für die Verwendung des Verfahrens beim Orten unterirdischer Leitungssysteme, z.B. für Wasser, Gas, Luft, elektrische Kabel, Lichtwellen- leiter usw., d a d u r c h  g e k e n n z e i c h n e t , daß im Leitungssystem vorhandene Kabelmuffen, Kondensatormuffen und Spulenkästen mit diesen verbundene Magnete aufweisen mit einer im Erdreich räumlichen Lage daß den magnetischen Feldlinien parallel zur Polachse der Erde verlaufen.

6. Ferromagnetischer Körper nach Anspruch 5, d a -
d u r c h   g e k e n n z e i c h n e t , daß die
Schieberarmaturen für Gas- Wasser- und Fernheizleitungssysteme mit einem Dauermagneten verbunden sind.

7. Ferromagnetischer Körper nach Anspruch 1 und 5, d a -
d u r c h   g e k e n n z e i c h n e t , daß Enden von
Kunststoffrohren mit Dauermagenten versehen sind.

8. Ferromagnetischer Körper nach Anspruch 1 und 5, d a -
d u r c h   g e k e n n z e i c h n e t , daß an Wendepunkten der Leitungsführung Magnetmarkierungen vorhanden
sind.

9. Ferromagnetischer Körper nach Anspruch 1, d a -
d u r c h   g e k e n n z e i c h n e t , daß ein
magnetisches Markierungssystem vorhanden ist, wobei
mehrere Magnetmarkierungen unter Ausnutzung der beiden
Polrichtungen (Nord-Süd bzw. Süd-Nord) bestimmte Stellen
im Gelände magnetisch kodierbar machen.

10. Ferromagnetischer Körper nach Anspruch 1 und 5, d a -
d u r c h   g e k e n n z e i c h n e t , daß der Magnetmarkenträger stabförmig ausgebildet ist.

11. Ferromagnetischer Körper nach den Ansprüchen 1 - 10,
d a d u r c h   g e k e n n z e i c h n e t , daß die
Magnete Dauermagnete sind.

12. Ferromagnetischer Körper nach den Ansprüchen 1 - 10,
d a d u r c h   g e k e n n z e i c h n e t , daß die
Magnete Elektromagnete sind, die von Zweiströmen des Leitungsstromes des unterirdischen elektrischen Kabels durchflossen sind.

13. Ferromagnetischer Körper nach den Ansprüchen 1 - 12, d a d u r c h   g e k e n n z e i c h n e t , daß die Magnet an dem zu markierenden Körper hinsichtlich ihrer Lage einstellbar befestigt sind.

14. Ferromagnetischer Körper nach den Ansprüchen 1 - 13, d a d u r c h   g e k e n n z e i c h n e t, daß die Magnete von einem ferromagnetischen pulverförmigen Aufstrich gebildet sind.

0096380

1/2

FIG 1

FIG 2

keine Felddifferenz

Felddifferenz

7

10

4

6

8

9

5

ferromagnetisches
Material

FIG 3

7

8

12

6

3

11

13

FIG 4